# EUROPÄISCHE PATENTANMELDUNG

(11) **EP 1 834 822 A2**
(43) Veröffentlichungstag der Anmeldung: **19.09.2007**
(21) Anmeldenummer: 07004717.0
(22) Anmeldetag: 07.03.2007
(51) Int. Cl.: B60J 7/14

(54) **Faltverdeck für ein Kraftfahrzeug**

(30) Priorität: 14.03.2006 DE 102006011686
(71) Anmelder: Webasto AG, 82131 Stockdorf (DE)
(72) Erfinder: Dintner, Thomas, 80995 München (DE)

(57) **Zusammenfassung**

Die Erfindung betrifft ein Faltverdeck für ein Kraftfahrzeug, mit einem eine Heckscheibe aufweisenden zentralen hinteren Dachelement (12), einem im geschlossenen Zustand des Faltverdecks in Fahrtrichtung vor dem hinteren Dachelement liegenden vorderen Dachelement (14) und auf beiden Seiten des zentralen hinteren Dachelementes angeordneten seitlichen hinteren Dachelementen (16), wobei beim Öffnen und Schließen des Faltverdecks (10) das zentrale hintere Dachelement (12) von einer in einem Hauptlager (24) gelagerten seitlich angeordneten Hauptsäule (18) und ein seitliches hinteres Dachelement (16) von einer C-Säule (20) geführt werden und wobei das vordere Dachelement (14) über einen in dem Hauptlager gelagerten Hauptlenker (22) angelenkt ist.

Erfindungsgemäß ist vorgesehen, dass das Hauptlager (24), die Hauptsäule (18), der Hauptlenker (22) und ein die Hauptsäule und den Hauptlenker entfernt vom Hauptlager gelenkig miteinander verbindendes Dachkopplungselement (26) ein Viergelenk bilden.

## Beschreibung

Die Erfindung betrifft ein Faltverdeck für ein Kraftfahrzeug, mit einem eine Heckscheibe aufweisenden zentralen hinteren Dachelement, einem im geschlossenen Zustand des Faltverdecks in Fahrtrichtung vor dem hinteren Dachelement liegenden vorderen Dachelement und auf beiden Seiten des zentralen hinteren Dachelementes angeordneten seitlichen hinteren Dachelementen, wobei beim Öffnen und Schließen des Faltverdecks das zentrale hintere Dachelement von einer in einem Hauptlager gelagerten seitlich angeordneten Hauptsäule und ein seitliches hinteres Dachelement von einer C-Säule geführt werden und wobei das vordere Dachelement über einen in dem Hauptlager gelagerten Hauptlenker angelenkt ist.

Die Erfindung betrifft weiterhin ein Kraftfahrzeug mit einem Faltverdeck.

Es ist bekannt, derartige Faltverdecke, die ein hinteres und ein vorderes starres Dachelement aufweisen, schwenkbeweglich über Säulen und Lenker in einem karosseriefesten Hauptlager zu lagern. Im Allgemeinen bilden dabei auf jeder Fahrzeugseite eine Hauptlager, eine C-Säule, ein Hauptlenker und ein den Hauptlenker und die C-Säule gelenkig miteinander verbindendes Dachkopplungselement ein Viergelenk, welches sich beim Öffnen beziehungsweise Schließen des Daches parallelogrammartig bewegt. Beispielsweise bei der Öffnungsbewegung wird das zwischen den C-Säulen angeordnete nach außen gewölbte Heckscheibenelement um eine im Hauptlager angeordnete Achse nach hinten geschwenkt, bis es eine im Wesentlichen horizontale Ausrichtung hat; gleichzeitig wird das vordere Dachelement über das hintere Dachelement geklappt, bis auch dieses im Wesentlichen horizontal liegt. Die Innenseiten der beiden Dachelemente sind in diesem abgelegten Zustand des Faltverdecks einander zugewandt. Aufgrund der im geschlossenen Zustand des Faltverdeckes vorliegende nach außen gewölbten Form der Dachelemente liegt im abgelegten Zustand des Dachelementes ein beträchtliches Volumen zwischen den Dachelementen vor, das ungenutzt ist und sich auch nicht als Stauraum nutzen lässt. Da das Faltverdeck in einem Bereich abgelegt wird, der bei einem Fahrzeug ohne Faltverdeck als Kofferraum dient, verliert ein solches Fahrzeug mit Faltverdeck beträchtlich an Kofferraumvolumen.

Um dieser Problematik zu begegnen, wurden bereits mehrere Verbesserungskonzepte vorgeschlagen.

Beispielsweise ist es bekannt, das hintere Dachelement nicht nur durch eine einfache Schwenkbewegung in seine Ablageposition zu bringen, sondern es auch noch um eine sich in Fahrzeugquerrichtung erstreckende Achse um 180 Grad zu drehen. Dies hat zur Folge, dass die Wölbungen des vorderen Dachelementes und des hinteren Dachelementes im abgelegten Zustand beide nach oben gerichtet sind und formgerecht ineinander liegen. Im Ergebnis verringert sich das verlorene Volumen zwischen den Dachelementen beträchtlich und das Kofferraumvolumen erhöht sich in entsprechendem Maße. Mit einer derartigen, das ursprüngliche Problem lösenden Dachkinematik entstehen jedoch weitere Randbedingungen, die zu neuen Problemen führen: Es ist nicht möglich, dass sich das hintere Dachelement, das heißt insbesondere die Heckscheibe, von ihrem Verbindungspunkt zum vorderen Dachelement nach hinten wesentlich verbreitert, da sie ansonsten beim Öffnen des Verdecks nach der erfolgten Drehbewegung nicht in die Wölbung des vorderen Dachelementes hineinpassen würde. Man spricht von einer notwendigen netzparallelen Auslegung der Heckscheibe, wodurch letztlich der transparente Bereich des Faltverdecks eingeschränkt wird. Um die für die Drehung der Heckscheibe erforderliche Beweglichkeit bereitzustellen, muss ferner auf die stabilisierende Wirkung der Heckscheibe verzichtet werden.

Gemäß einem weiteren Konzept wurde vorgeschlagen, das vordere Dachelement und das hintere Dachelement in konventioneller Weise mit ihren Innenseiten einander zugewandt abzulegen, allerdings die Kinematik so auszugestalten, dass der im abgelegten Zustand hintere Bereich des hinteren Dachelementes relativ zum Hauptlager angehoben ist. Um diese Möglichkeit des Anhebens zur Verfügung zu stellen, ist es aber auch hier erforderlich, auf eine Gelenkverbindung zwischen der Heckscheibe und dem vorderen Dachelement zu verzichten, so dass die versteifenden Wirkung des Heckscheibenelementes verloren geht. Mit anderen Worten: Das Faltverdeck muss während seiner Bewegung allein durch das vordere Dachelement und die hinteren seitlichen Dachelemente ausreichend stabil sein, was in der Praxis nur schwierig realisierbar ist.

Bei den geschilderten Konzepten des Standes der Technik besteht ein weiteres Problem in Bezug auf den Bauraum für die Heckleuchten des Fahrzeugs. Da die C-Säule als Bestandteil des Haupt-Viergelenks im geschlossenen Zustand des Faltverdecks weit nach vorne ragt, wird diese im abgelegten Zustand des Faltverdecks relativ weit hinten angeordnet sein. Dies hat zur Folge, dass die naturgemäß weit außen angeordneten C-Säulen in dem Bereich abgelegt werden, der an sich für die Anbringung von Heckleuchten zur Verfügung stehen sollte.

Der Erfindung liegt die Aufgabe zugrunde, ein Faltverdeck in der Weise weiterzubilden, dass die genannten Probleme zumindest teilweise gelöst werden, wobei insbesondere eine platzsparende Unterbringung des Faltverdecks im abgelegten Zustand, eine Variabilität bei der Gestaltung der Heckscheibe, eine ausreichende Stabilität des Faltverdecks bei seiner Bewegung und zusätzlicher Bauraum für die Heckleuchten zur Verfügung gestellt werden sollen.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung baut auf dem gattungsgemäßen Faltverdeck dadurch auf, dass das Hauptlager, die Hauptsäule, der Hauptlenker und ein die Hauptsäule und den Hauptlenker entfernt vom Hauptlager gelenkig miteinander verbindendes Dachkopplungselement ein Viergelenk bilden. Somit kann das Haupt-Viergelenk für die Bewegung des Faltverdecks unabhängig von der C-Säule zur Verfügung gestellt werden. Dies ermöglicht eine von der Bewegung des Haupt-Viergelenks unabhängige Bewegung der C-Säule. Hierdurch kann die C-Säule im abgelegten Zustand des Faltverdeckes weiter vorne platziert werden, wodurch Bauraum für die Heckleuchte geschaffen wird. Durch die unabhängige Bewegung der C-Säule und der davon geführten seitlichen hinteren Dachelemente vom zentralen hinteren Dachelement, kann letzteres im abgelegten Zustand dann in die seitlichen hinteren Dachelemente nach oben "eintauchen", so dass unterhalb des zentralen hinteren Dachelementes zusätzlicher Stauraum geschaffen wird. Da weiterhin das zentrale hintere Dachelement, das heißt insbesondere das Heckscheibenelement, Bestandteil des Haupt-Viergelenks ist, wird durch die Steifigkeit des Heckscheibenelementes zusätzliche Stabilität bei der Bewegung des Faltverdecks zur Verfügung gestellt. Ein netzparalleler Zuschnitt des Heckscheibenelementes ist nicht erforderlich, da keine Drehung des Heckscheibenelementes erfolgt; folglich schafft die Erfindung zusätzliche gestalterische Freiheitsgrade.

Nützlicherweise ist vorgesehen, dass die C-Säule über einen oberen Zwischenlenker gelenkig mit dem Dachkopplungselement verbunden ist. Über diesen Zwischenlenker lässt sich die von dem Hauptlenker auf das vordere Dachelement übertragene Bewegung auf die C-Säule übertragen, ohne dass diese direkt - und damit unter Schaffung einer weiteren Zwangsbedingung für die Bewegung - direkt am Dachkopplungselement anzuordnen wäre.

Die Erfindung ist nützlicherweise dadurch weitergebildet, dass die C-Säule entfernt von dem Dachkopplungselement direkt in dem Hauptlager gelagert ist. Diese direkte Lagerung stellt eine besonders einfache Realisierung dar.

Es ist aber auch möglich, dass die C-Säule entfernt von dem Dachkopplungselement über einen unteren Hauptzwischenlenker in dem Hauptlager gelagert ist. Hierdurch wird ein weiterer Freiheitsgrad für die Bewegung der C-Säule zur Verfügung gestellt, wodurch deren Bewegung relativ zu den anderen Komponenten ohne störenden Einfluss gestaltet werden kann und wodurch die Ablageposition der C-Säule nochmals variiert und damit verbessert werden kann.

In diesem Zusammenhang ist es besonders vorteilhaft, dass die C-Säule entfernt von dem Dachkopplungselement über einen unteren Nebenzwischenlenker gelenkig mit dem Hauptlenker verbunden ist. Die C-Säule wird somit vom Hauptlager über den Hauptzwischenlenker getragen, während der Nebenzwischenlenker die Bewegung des Hauptzwischenlenkers mitbestimmt. Durch den Hauptzwischenlenker, den Nebenzwischenlenker, den Hauptlenker und das Hauptlager wird somit ein weiteres Viergelenk zur Verfügung gestellt, das dem Haupt-Viergelenk vorgeschaltet ist.

Eine weitere Möglichkeit zur Verlagerung des karosserieseitigen Anlenkpunktes der C-Säule besteht darin, dass die C-Säule entfernt von dem Dachkopplungselement gelenkig mit der Hauptsäule verbunden ist.

Die Erfindung betrifft weiterhin ein Kraftfahrzeug mit einem erfindungsgemäßen Faltverdeck.

Die Erfindung wird nun mit Bezug auf die begleitenden Zeichnungen anhand besonders bevorzugter Ausführungsformen beispielhaft erläutert.

Es zeigen:
- Figur 1: eine perspektivische Darstellung eines Faltverdecks im geschlossenen Zustand;
- Figur 2: eine perspektivische Darstellung des Faltverdecks gemäß Figur 1 in einer Zwischenstellung;
- Figur 3: eine Seitenansicht einer ersten Ausführungsform eines Faltverdecks im geschlossenen Zustand;
- Figur 4: eine Seitenansicht der ersten Ausführungsform in einer ersten Zwischenstellung;
- Figur 5: eine Seitenansicht der ersten Ausführungsform in einer zweiten Zwischenstellung;
- Figur 6: eine Seitenansicht der ersten Ausführungsform in einer abgelegten Stellung;
- Figur 7: eine Seitenansicht einer zweiten Ausführungsform eines Faltverdecks im geschlossenen Zustand;
- Figur 8: eine Seitenansicht der zweiten Ausführungsform in einer ersten Zwischenstellung;
- Figur 9: eine Seitenansicht der zweiten Ausführungsform in einer zweiten Zwischenstellung;
- Figur 10: eine Seitenansicht der zweiten Ausführungsform in einer abgelegten Stellung.

Bei der nachfolgenden Beschreibung der Zeichnungen bezeichnen gleiche Bezugszeichen gleiche oder vergleichbare Komponenten.

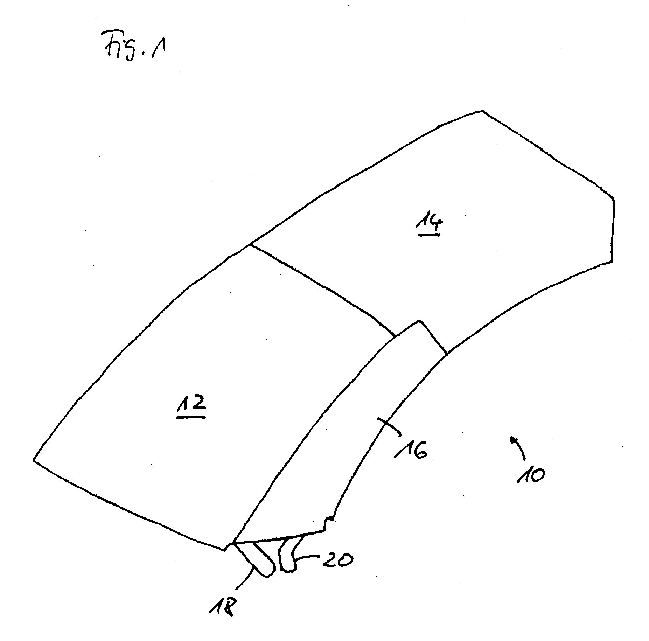

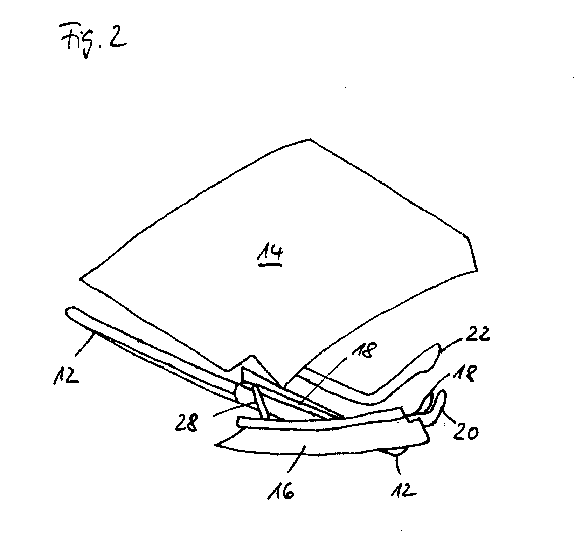

Die Figuren 1 und 2 zeigen ein Faltverdeck in einer geschlossenen Stellung beziehungsweise einer Zwischenstellung. Das Faltverdeck 10 weist ein zentrales hinteres Dachelement 12 und ein vorderes Dachelement 14 auf. Das zentrale hintere Dachelement 12 enthält die Heckscheibe. Seitlich von dem zentralen hinteren Dachelement 12 sind auf jeder Fahrzeigseite seitliche hintere Dachelemente 16 angeordnet, wobei in den perspektivischen Darstellungen nur eines dieser seitlichen hinteren Dachelemente 16 erkennbar ist. Das zentrale hintere Dachelement 12 wird von einer in einem hier nicht dargestellten Hauptlager gelagerten Hauptsäule 18 getragen und in seiner Bewegung beim Öffnen und Schließen des Faltverdecks 10 geführt. Das seitliche hintere Dachelement 16 wird von einer C-Säule 20 getragen und geführt. Die C-Säule 20 kann ebenfalls unmittelbar oder mittelbar in dem hier nicht dargestellten Hauptlager gelagert sein. Eine andere Möglichkeit besteht darin, die C-Säule 20 gelenkig an der Hauptsäule 18 zu lagern. Ferner ist ein in Figur 1 nicht erkennbarer aber in Figur 2 dargestellter Hauptlenker 22 vorgesehen. Dieser lenkt das vordere Dachelement 14 an, und er ist ebenfalls in dem Hauptlager gelagert.

Die Öffnungsbewegung des Faltverdecks 10 kann manuell oder über einen Antrieb veranlasst werden, wobei der Antrieb vorzugsweise den Hauptlenker 22 angreift. Die C-Säule 20 ist an ihrem dem Hauptlager abgewandten Ende über einen Zwischenlenker 28 mit einem hier nicht dargestellten Dachkopplungselement gelenkig verbunden, mit der auch die Hauptsäule 18 und der Hauptlenker 22 gelenkig verbunden sind. Durch die somit vorliegende Konstruktion wird insgesamt ein Haupt-Viergelenk zur Verfügung gestellt, das aus Hauptlager, Hauptsäule 18, Hauptlenker 22 und Dachkopplungselement besteht, wobei die C-Säule 20 nicht Bestandteil des Viergelenks ist. Der C-Säule 20 wird vielmehr über den Zwischenlenker 28 eine eigene und gestaltbare Bewegung vermittelt.

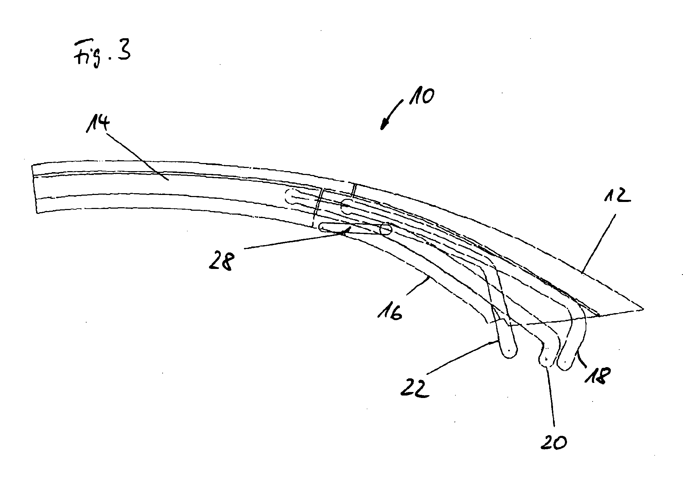

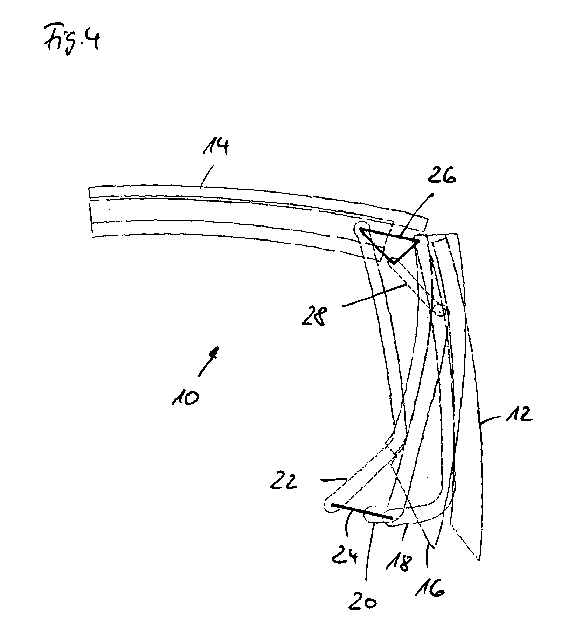

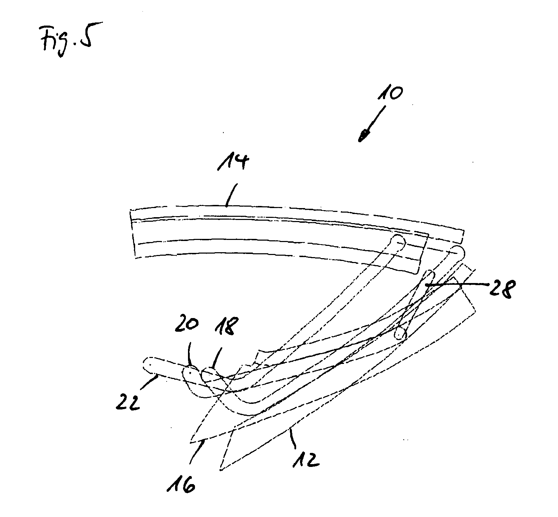

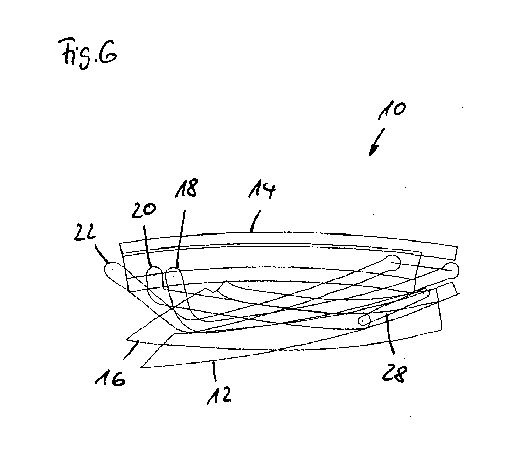

Die Kinematik der somit vorliegenden Anordnung wird anhand der Seitenansichten gemäß den Figuren 3 bis 6 erläutert. Die Figuren 3 bis 6 zeigen die Konturen der beteiligten Säulen und Lenker, auch wenn diese in der vorliegenden Ansicht tatsächlich teilweise verdeckt sind. Eine bevorzugte Anordnung der Säulen und Lenker von außen nach innen ist durch die Reihenfolge C-Säule 20, Hauptlenker 22, Hauptsäule 18 gegeben. Der Zwischenlenker 28 kann beispielsweise außerhalb der C-Säule liegen. Wird das Faltverdeck 10 in Bewegung gesetzt, so zieht der Hauptlenker 20 das vordere Dachelement 14 nach hinten. In Figur 4 sind das Hauptlager 24 und das Dachkopplungselement 26 schematisch angedeutet, also die Komponenten, die zusammen mit dem Hauptlenker 22 und der Hauptsäule 18 das Haupt-Viergelenk für die Bewegung des Faltverdecks 10 bilden. Durch die Bewegung dieses Viergelenks 26 wird das zentrale hintere Dachelement 12 um die Lagerstelle der Hauptsäule 18 nach hinten geschwenkt. Über das Dachkopplungselement 26 wird weiterhin eine Kraft auf den Zwischenlenker 28 übertragen, so dass auch die von dem Zwischenlenker 28 angelenkte C-Säule 20 in Bewegung versetzt wird und um ihre Lagerstelle im Hauptlager nach hinten verschwenkt wird. Allerdings erfolgt die Bewegung der C-Säule 20 anders als die Bewegung des Haupt-Viergelenks, so dass die C-Säule und die davon getragenen hinteren seitlichen Dachelemente 16 im abgelegten Zustand eine Position einnehmen, die im Vergleich zu Ausführungsformen des Standes der Technik in Fahrtrichtung des Fahrzeugs weiter vorne gelegen ist. Wie insbesondere in Figur 6, die den abgelegten Zustand des Faltverdecks 10 zeigt, erkennbar ist, überschneiden sich das zentrale hintere Dachelement 12 und die seitlichen hinteren Dachelemente 16 in vertikaler Richtung. Mit anderen Worten, das zentrale hintere Dachelement nimmt eine vergleichsweise hohe Lage ein, und es hinterlässt auf diese Weise zusätzlichen Stauraum unterhalb des abgelegten Faltverdecks 10. Da bei der Bewegung des Faltverdecks 10 die Hauptsäule und somit das davon getragene und geführte zentrale hintere Dachelement 12 mit der Heckscheibe Bestandteil des Haupt-Viergelenks sind, liegt eine besonders stabile Anordnung vor, nämlich unterstützt durch das starre Heckscheibenelement.

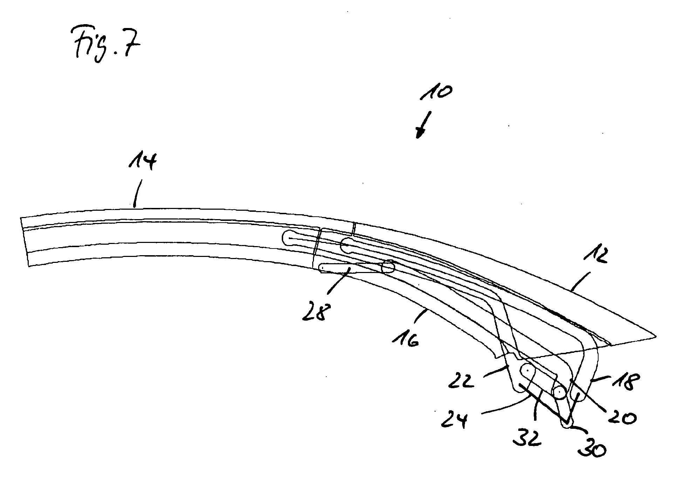

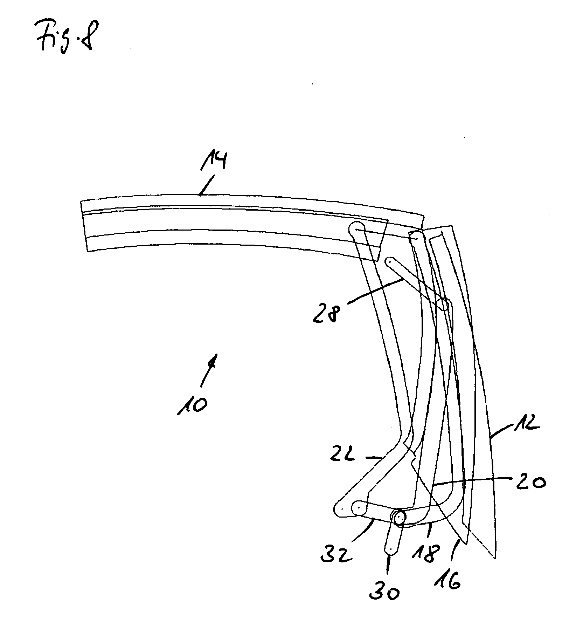

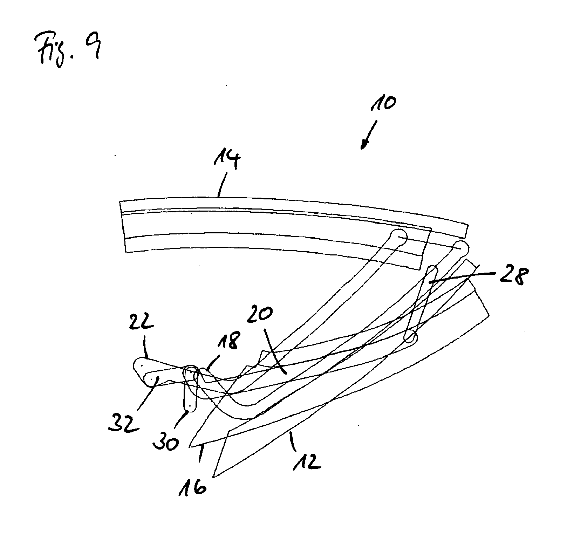

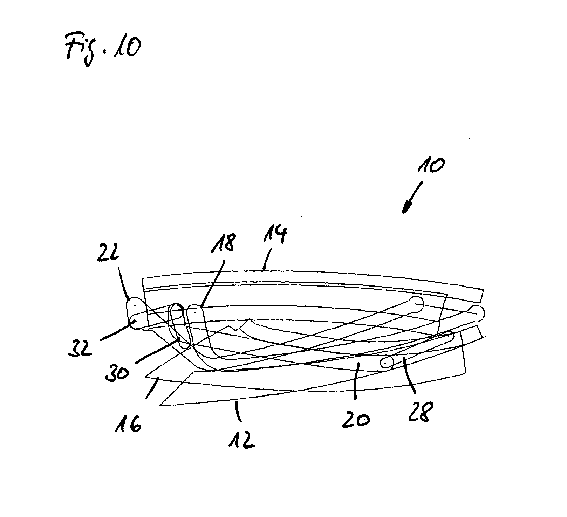

Die Figuren 7 bis 10 stellen die Kinematik einer weiteren Ausführungsform des erfindungsgemäßen Faltverdecks 10 dar. Im Unterschied zu der Ausführungsform gemäß den Figuren 3 bis 6 ist die C-Säule 20 nicht direkt am Hauptlager 24 gelagert, sondern über einen Hauptzwischenlenker 30. Die Bewegung dieses Hauptzwischenlenkers 30 wird durch einen Nebenzwischenlenker 32 mitbestimmt, der an einem Ende mit der C-Säule 20 und am anderen Ende mit dem Hauptlenker 22 gelenkig verbunden ist. Hierdurch gelingt es, die Bewegung der C-Säule 20 während der Öffnungs- beziehungsweise Schließbewegung des Faltverdecks 10 zu modifizieren. In Figur 7 ist erkennbar, dass der Hauptzwischenlenker 30 leicht nach vorne geneigt ist, das heißt das lagerseitige Ende der C-Säule 20 liegt vor dem eigentlichen Lagerpunkt im Hauptlager 24. Diese Situation verändert sich während des Öffnens, wie beispielsweise anhand von Figur 8 erkennbar ist. Hier neigt sich der Hauptzwischenlenker 30 leicht nach hinten, das heißt dass das karosserieseitige Ende der C-Säule 20 liegt etwas hinter ihrem eigentlichen Lagerpunkt im Hauptlager 24. Zur Ablage des Faltverdecks 10 neigt sich der Hauptzwischenlenker über die zweite Zwischenstellung gemäß Figur 9 bis in die abgelegte Stellung 10 wieder in Fahrtrichtung nach vorne. Die C-Säule 20 gelangt somit in eine vorteilhafte weit vorn angeordnete Ablageposition.

Die vorliegende Beschreibung des erfindungsgemäßen Faltverdeckes erfolgt anhand der Säulen- und Lenkeranordnung auf einer Seite des Kraftfahrzeugs. Die Anordnung auf der anderen Seite des Kraftfahrzeugs ist vorzugsweise identisch, das heißt spiegelbildlich. Es ist aber auch denkbar, dass auf verschiedenen Fahrzeugseiten verschiedene Lenkeranordnungen gewählt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Faltverdeck
- 12: zentrales hinteres Dachelement
- 14: vorderes Dachelement
- 16: seitliches hinteres Dachelement
- 18: Hauptsäule
- 20: C-Säule
- 22: Hauptlenker
- 24: Hauptlager
- 26: Dachkopplungselement
- 28: Zwischenlenker
- 30: Hauptzwischenlenker
- 32: Nebenzwischenlenker

## Patentansprüche

1. Faltverdeck für ein Kraftfahrzeug, mit
- einem eine Heckscheibe aufweisenden zentralen hinteren Dachelement (12),
- einem im geschlossenen Zustand des Faltverdecks in Fahrtrichtung vor dem hinteren Dachelement liegenden vorderen Dachelement (14) und
- auf beiden Seiten des zentralen hinteren Dachelementes angeordneten seitlichen hinteren Dachelementen (16),
- wobei beim Öffnen und Schließen des Faltverdecks (10) das zentrale hintere Dachelement (12) von einer in einem Hauptlager (24) gelagerten seitlich angeordneten Hauptsäule (18) und ein seitliches hinteres Dachelement (16) von einer C-Säule (20) geführt werden und
- wobei das vordere Dachelement (14) über einen in dem Hauptlager gelagerten Hauptlenker (22) angelenkt ist,
**dadurch gekennzeichnet, dass** das Hauptlager (24), die Hauptsäule (18), der Hauptlenker (22) und ein die Hauptsäule und den Hauptlenker entfernt vom Hauptlager gelenkig miteinander verbindendes Dachkopplungselement (26) ein Viergelenk bilden.

2. Faltverdeck nach Anspruch 1, **dadurch gekennzeichnet, dass** die C-Säule (20) über einen oberen Zwischenlenker (28) gelenkig mit dem Dachkopplungselement (26) verbunden ist.

3. Faltverdeck nach Anspruch 1 oder 2, **dadurch gekennzeichnet, dass** die C-Säule (20) entfernt von dem Dachkopplungselement (26) direkt in dem Hauptlager (24) gelagert ist.

4. Faltverdeck nach Anspruch 1 oder 2, **dadurch gekennzeichnet, dass** die C-Säule (20) entfernt von dem Dachkopplungselement (26) über einen unteren Hauptzwischenlenker (30) in dem Hauptlager gelagert ist.

5. Faltverdeck nach Anspruch 4, **dadurch gekennzeichnet, dass** die C-Säule entfernt von dem Dachkopplungselement (26) über einen unteren Nebenzwischenlenker (32) gelenkig mit dem Hauptlenker verbunden ist.

6. Faltverdeck nach Anspruch 1 oder 2, **dadurch gekennzeichnet, dass** die C-Säule (20) entfernt von dem Dachkopplungselement (26) gelenkig mit der Hauptsäule (18) verbunden ist.

7. Kraftfahrzeug mit einem Faltverdeck (10) nach einem der vorhergehenden Ansprüche.
